(19) Europäisches Patentamt
European Patent Office
Office européen des brevets

(11) **EP 2 894 319 B1**

(12) **EUROPEAN PATENT SPECIFICATION**

(45) Date of publication and mention
of the grant of the patent:
**10.06.2020 Bulletin 2020/24**

(21) Application number: **14200327.6**

(22) Date of filing: **24.12.2014**

(51) Int Cl.:
*F02D 41/12* (2006.01)    *F02D 41/00* (2006.01)
*F02D 23/00* (2006.01)    *F02D 41/04* (2006.01)
*F02D 13/02* (2006.01)    *F02B 37/18* (2006.01)
*F02P 5/15* (2006.01)    *F02D 41/02* (2006.01)

(54) **METHOD FOR CONTROLLING AN INTERNAL COMBUSTION ENGINE TURBOCHARGED BY MEANS OF A TURBOCHARGER DURING A RELEASE STEP**

VERFAHREN ZUR STEUERUNG EINES VERBRENNUNGSMOTORS MIT TURBOLADER WÄHREND EINES GASABNAHMESCHRITTS

PROCÉDÉ DE COMMANDE D'UN MOTEUR À COMBUSTION INTERNE SURALIMENTÉ PAR UN TURBOCOMPRESSEUR LORS D'UNE ÉTAPE DE LEVÉE DE PIED

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2013 IT BO20130719**
**24.12.2013 IT BO20130720**
**24.12.2013 IT BO20130721**

(43) Date of publication of application:
**15.07.2015 Bulletin 2015/29**

(73) Proprietor: **Magneti Marelli S.p.A.**
**20011 Corbetta (MI) (IT)**

(72) Inventor: **PANCIROLI, Marco**
**40100 BOLOGNA (IT)**

(74) Representative: **Maccagnan, Matteo et al**
**Studio Torta S.p.A.**
**Via Viotti, 9**
**10121 Torino (IT)**

(56) References cited:
**EP-A1- 1 008 739       EP-A1- 2 674 598**
**WO-A1-2005/088105    DE-A1-102005 010 792**
**US-A1- 2011 270 509   US-A1- 2012 029 787**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL SECTOR

The present invention relates to a method for controlling an internal combustion engine turbocharged by means of a turbocharger during a release step.

PRIOR ART

As is known, some internal combustion engines are provided with a turbocharger supercharging. (or turbosupercharging) system, which is able to increase the power developed by the engine by exploiting the enthalpy of the exhaust gases for compressing the air drawn in by the engine and hence increasing the intake volumetric efficiency.
A turbosupercharging system comprises a turbocharger provided with a turbine, which is set along an exhaust duct so as to rotate at high speed under the thrust of the exhaust gases expelled by the engine, and a compressor, which is driven in rotation by the turbine and is set along the air-supply duct for compressing the air drawn in by the engine.
Usually, when from a condition of modest engine torque or power (low r.p.m. and contained speed) there occurs a sudden and fast demand for considerable increase of the torque or motive power (i.e., when the driver presses the accelerator pedal right down, for example when he wants to overtake) there is a somewhat evident delay in response of the turbocharger. This phenomenon, known as "turbo lag", represents the tendency of engines provided with turbochargers to lack response in power to fast operation of the accelerator and is particularly troublesome in the case of applications on sportscars in which the turbosupercharging system enables high levels of performance to be achieved. Turbo lag is mainly caused by moment of inertia of the rotor that occurs when there is a sudden and fast demand for greater torque or else motive power and by the fact that the overall volume of the circuit set downstream of the compressor must increase its own internal pressure.
Over the years, there have been proposed various solutions aimed at reducing turbo lag and improving further the levels of performance of engines provided with turbochargers. For example, it is possible to use a variable-geometry turbocharger or else a turbocharger comprising a plurality of turbines in a series or parallel configuration, or other solutions still. All the solutions so far known are, however, particularly disadvantageous in terms of costs and overall dimensions.
Turbo lag is then particularly evident during the manoeuvres of release, i.e., when the driver lifts his foot off the accelerator pedal interrupting the demand for torque to be transmitted to the drive wheels and throughout the time interval during which the internal combustion engine is in a cut-off condition up to the next demand for torque.

DESCRIPTION OF THE INVENTION

The aim of the present invention is to provide a method for controlling an internal combustion engine turbocharged by means of a turbocharger during a release step, said control method being free from the drawbacks of the prior art and, in particular, being easy and inexpensive to implement.
According to the present invention, a method for controlling an internal combustion engine turbocharged by means of a turbocharger during a release step is provided as specified in the annexed claims.

BRIEF DESCRIPTION OF THE DRAWINGS

The present invention will now be described with reference to the annexed drawings, which illustrate a non-limiting example of embodiment thereof and in which:

- Figure 1 is a schematic view of an internal combustion engine supercharged by means of a turbocharger and provided with a control unit that implements the control method forming the subject of the present invention;
- Figure 2 is a graph that illustrates the plots of some characteristic quantities in a first embodiment of the control method forming the subject of the present invention; and

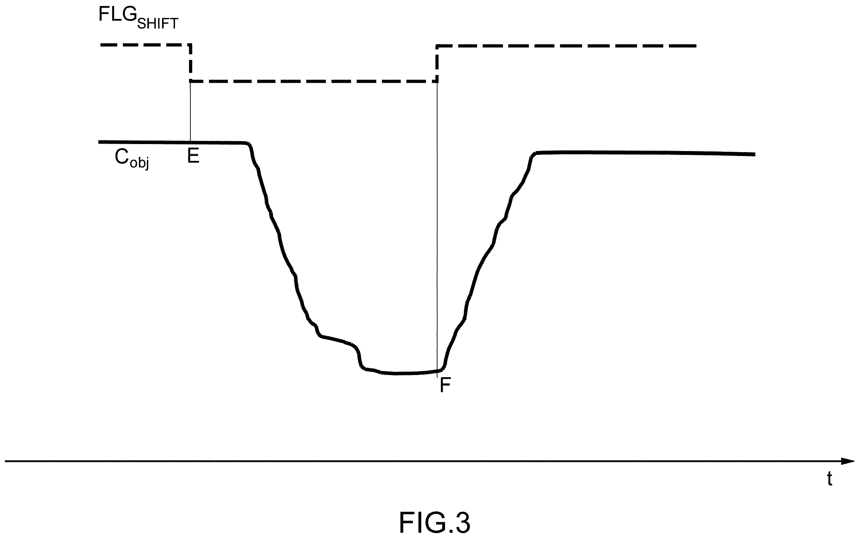

- Figure 3 is a graph that illustrates the plots of some characteristic quantities in a second embodiment of the control method forming the subject of the present invention.

PREFERRED EMBODIMENTS OF THE INVENTION

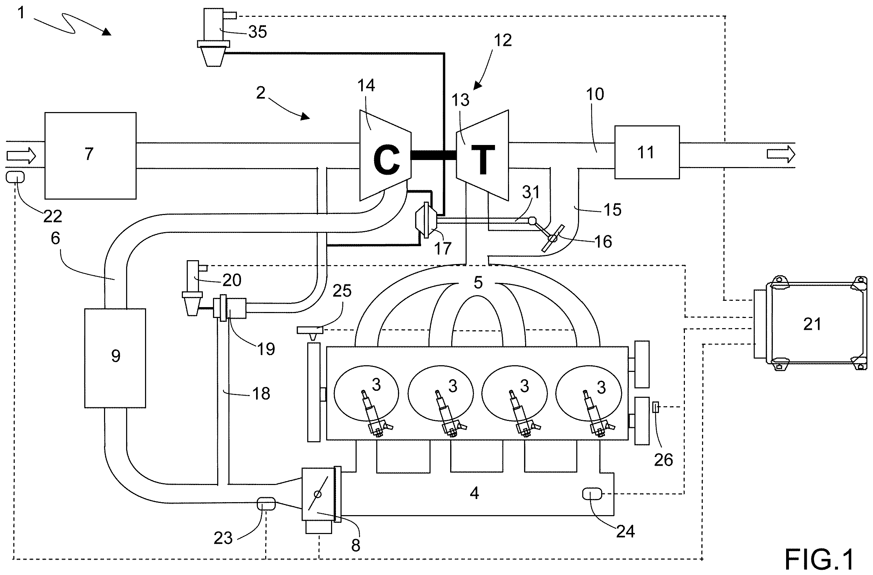

In Figure 1, designated as a whole by the reference number 1 is an internal combustion engine supercharged by means of a turbosupercharging system 2.
The internal combustion engine 1 comprises four cylinders 3, each of which is connected to an intake manifold 4 via at least one respective intake valve (not illustrated) and to an exhaust manifold 5 via at least one respective exhaust valve (not illustrated). The intake manifold 4 receives fresh air (i.e., air coming from the external environment) through an intake duct 6, which is provided with an air filter 7 and is regulated by a throttle valve 8. Set along the intake duct 6 is an intercooler 9 having the function of cooling the air drawn in. Connected to the exhaust manifold 5 is an exhaust duct 10 that feeds the exhaust gases produced by combustion to an exhaust system, which emits the gases produced by combustion into the atmosphere and normally comprises at least one catalytic converter 11 and at least one silencer (not illustrated) set downstream of the catalytic converter 11.

The supercharging system 2 of the internal combustion engine 1 comprises a turbocharger 12 provided with a turbine 13, which is set along the exhaust duct 10 for rotating at high speed under the action of the exhaust gases expelled by the cylinders 3, and a compressor 14, which is set along the intake duct 6 and is mechanically connected to the turbine 13 so as to be drawn in rotation by the turbine 13 itself in order to increase the pressure of the air fed into the intake duct 6.

Along the exhaust duct 10 a bypass duct 15 is provided, which is connected in parallel to the turbine 13 so as to present its own ends connected upstream and downstream of the turbine 13 itself. Set along the bypass duct 15 is a wastegate valve 16, which is designed to regulate the flowrate of the exhaust gases that flow through the bypass duct 15 and is controlled by a pneumatic actuator 17. Along the intake duct 6 a bypass duct 18 is provided, which is connected in parallel to the compressor 14 so as to present its own ends connected upstream and downstream of the compressor 14 itself. Set along the bypass duct 18 is a blow-off valve 19, which is designed to regulate the flowrate of the air that flows through the bypass duct 18 and is driven by an electric actuator 20.

The internal combustion engine 1 is controlled by an electronic control unit 21, which supervises operation of all the components of the internal combustion engine 1, amongst which the supercharging system 2. In particular, the electronic control unit 21 drives the actuators 17 and 20 of the wastegate valve 16 and of the blow-off valve 19. The electronic control unit 21 is connected to sensors 22 that measure the temperature and pressure along the intake duct 6 upstream of the compressor 14, to sensors 23 that measure the temperature and pressure along the intake duct 6 upstream of the throttle valve 8, and to sensors 24 that measure the temperature and pressure within the intake manifold 4. Moreover, the electronic control unit 21 is connected to a sensor 25 that measures the angular position (and hence the speed of rotation) of an engine shaft of the internal combustion engine 1 and to a sensor 26 that measures the phase of the intake and/or exhaust valves.

Typically, passage of air from the intake manifold 4 directly into the exhaust duct 10 is obtained by means of an appropriate phasing of the intake valves (not illustrated) that connect each cylinder 3 to the intake manifold 4 and of the exhaust valves (not illustrated) that connect each cylinder 3 to the exhaust manifold 5 for enabling passage of fresh air directly from the intake manifold 4 to the exhaust manifold 5 and hence into the exhaust duct 10 of the internal combustion engine 1.

It is evident that actuation of the intake valves (not illustrated) that connect each cylinder 3 to the intake manifold 4 and of the exhaust valves (not illustrated) that connect each cylinder 3 to the exhaust manifold 5 can be obtained by means of an actuator of a known type, such as for example an actuator of a VVT (variable-valve timing) type, or else again with an electromagnetic or else electro-hydraulic camless actuator.

Described hereinafter is the control strategy implemented by the electronic control unit 21 during a manoeuvre of release and up to the next demand for torque C.

The electronic control unit 21 is configured for recognizing a release step, i.e., for verifying the condition where the driver lifts his foot off the accelerator pedal interrupting the demand for torque C to be transmitted to the drive wheels.

In particular, within the electronic control unit 21 a release indicator (or flag) is stored, designated by $FLG_{RIL}$, which basically identifies when a release manoeuvre is in progress.

In particular, the release flag $FLG_{RIL}$ is enabled throughout the release manoeuvre up to the next demand for torque C.

The release flag $FLG_{RIL}$ is normally disabled.

According to a first variant, in order for the electronic control unit 21 to enable the release flag $FLG_{RIL}$ the following condition must be satisfied:

$$dC_{obj} < TV_1 \quad [1]$$

where:

$dC_{obj}$ is the first time derivative of the objective torque $C_{obj}$; and
$TV_1$ is a threshold value.

The threshold value $TV_1$, which is determined in a preliminary adjustment and set-up step, is preferably constant and less than zero.

Once the electronic control unit 21 has enabled the release flag $FLG_{RIL}$, in order to disable the release flag $FLG_{RIL}$ itself, the following condition must be satisfied:

$$C_{obj} > TV_2 \; [2]$$

where:

$C_{obj}$ is the objective torque; and
$TV_2$ is a threshold value.

The threshold value $TV_2$, which is determined in a preliminary adjustment and set-up step, is preferably constant and greater than zero.

According to a second variant, in order for the electronic control unit 21 to enable the release flag $FLG_{RIL}$ both the following conditions must be satisfied:

$$(dC_{obj} < TV_1) \; AND \; (dPP < TV_3) \; [3]$$

where:

$dC_{obj}$ is the first time derivative of the objective torque $C_{obj}$;
$dPP$ is the first time derivative of the position of the accelerator pedal;
$TV_1$ is a threshold value; and
$TV_3$ is a threshold value.

The threshold value $TV_1$ and the threshold value $TV_3$, which are determined in a preliminary adjustment and set-up step, are preferably constant and less than zero.

Once the electronic control unit 21 has enabled the release flag $FLG_{RIL}$, in order to disable the release flag $FLG_{RIL}$ itself, one of the following conditions must be satisfied:

$$(C_{obj} > TV_2) \; OR \; ((PP > TV_4) \; AND \; (dPP > TV_5)) \; [4]$$

where:

$C_{obj}$ is the objective torque;
$PP$ is the position of the accelerator pedal;
$dPP$ is the first time derivative of the position of the accelerator pedal;
$TV_2$ is a threshold value;
$TV_4$ is a threshold value; and
$TV_5$ is a threshold value.

The threshold value $TV_2$, the threshold value $TV_4$, and the threshold value $TV_5$, which are determined in a preliminary adjustment and set-up step, are preferably constant and greater than zero.

The check on the position PP of the accelerator pedal and on the first time derivative dPP of the position of the accelerator pedal prevents slight and rapid action of the driver on the accelerator pedal from yielding an erroneous and undesired disabling of the release flag $FLG_{RIL}$, when, in actual fact, a release step is in progress.

According to a third variant, in order for the electronic control unit 21 to enable the release flag $FLG_{RIL}$ all the following conditions must be satisfied:

$$(dC_{obj} < TV_1) \; AND \; (dPP < TV_3) \; AND \; (C_{obj} > f(V)) \; [5]$$

where:

$dC_{obj}$ is the first time derivative of the objective torque $C_{obj}$;
$C_{obj}$ is the objective torque;

V is the speed of the vehicle;
dPP is the first time derivative of the position of the accelerator pedal;
$TV_1$ is a threshold value; and
$TV_3$ is a threshold value.

The threshold value $TV_1$ and the threshold value $TV_3$, which are determined in a preliminary adjustment and set-up step, are preferably constant and less than zero.

Once the electronic control unit 21 has enabled the release flag $FLG_{RIL}$, in order to disable the release flag $FLG_{RIL}$ itself, one of the following conditions must be satisfied:

$$(C_{obj} > TV_2)\ OR\ ((PP > TV_4)\ AND\ (dPP > TV_5))\ \ [6]$$

where:

$C_{obj}$ is the objective torque;
PP is the position of the accelerator pedal;
dPP is the first time derivative of the position of the accelerator pedal;
$TV_2$ is a threshold value;
$TV_4$ is a threshold value; and
$TV_5$ is a threshold value.

The threshold value $TV_2$, the threshold value $TV_4$, and the threshold value $TV_5$, which are determined in a preliminary adjustment and set-up step, are preferably constant and greater than zero.

In this case, the further condition where the objective torque $C_{obj}$ must be greater than a value determined as a function of the speed of the vehicle itself makes it possible to exclude an undesired enabling of the release flag $FLG_{RIL}$ in low-load conditions.

According to a preferred variant, once the electronic control unit 21 has enabled the release flag $FLG_{RIL}$, the electronic control unit 21 itself is configured for controlling the internal combustion engine 1 so as to manage a supercharging reserve that enables optimization of performance of the internal combustion engine 1 itself. Basically, an effective supercharging pressure $P_{obj}$ is maintained that is higher than the minimum objective supercharging pressure $P_{min}$ that is able to guarantee the objective load.

In detail, the electronic control unit 21 is configured for determining a value of minimum objective supercharging pressure $P_{min}$ and a value of maximum objective supercharging pressure $P_{max}$ that will guarantee the objective load, i.e., the mass of air necessary for the internal combustion engine 1 to generate the objective torque $C_{obj}$.

The difference between the value of maximum objective supercharging pressure $P_{max}$ and the value of minimum objective supercharging pressure $P_{min}$ defines a maximum supercharging reserve $RDS_{max}$.

The effective supercharging pressure $P_{obj}$ is maintained higher than the minimum objective supercharging pressure $P_{min}$ and equal to a value comprised within the interval of values defined by the maximum supercharging reserve $RDS_{max}$.

For this reason, it is possible to define an effective supercharging reserve RDS, which is equal to the algebraic difference between the effective supercharging pressure $P_{obj}$ and the minimum objective supercharging pressure $P_{min}$.

The amplitude of the effective supercharging reserve RDS may be determined as a function of a plurality of objectives. In particular, it may be assumed that one of the following objectives are to be optimized alternatively or else a combination thereof:

- global efficiency of the internal combustion engine 1 and of the turbocharger 12 (namely, optimization of the global specific consumption $c_s$ of the internal combustion engine 1);
- specific consumption $c_s$ for each engine point;
- acceleration of the internal combustion engine 1;
- reduction of the turbo lag of the turbocharger 12; and
- management of the energy in the case where also an electrical machine (not illustrated) connected to the turbocharger 12 is present.

Moreover, the amplitude of the effective supercharging reserve RDS is variable as a function of a plurality of parameters, such as for example: the position of the selector that determines the operating mode chosen by the driver, the point of the circuit or of the road along which the car is travelling, the state of filling of the tank, and the difference between the maximum torque Cmax that can be delivered by the internal combustion engine 1 and the objective torque

$C_{obj}$. Some of these parameters may be determined in a preliminary adjustment and set-up step of the electronic control unit 21, whereas other parameters may be determined, during driving, by the driver of the vehicle.

In order to generate an effective supercharging pressure $P_{obj}$ higher than the minimum objective supercharging pressure $P_{min}$ that is able to guarantee the objective load, it is necessary to degrade the ignition advance implemented by the internal combustion engine 1 for the cylinders 3 and increase the mass of air at inlet to the internal combustion engine 1. The effective supercharging reserve RDS (i.e., when the effective supercharging pressure $P_{obj}$ is maintained higher than the minimum objective supercharging pressure $P_{min}$) hence enables increase of the total flowrate of the exhaust gases (as a result of the increase of the mass of air at inlet to the internal combustion engine 1) and the enthalpy of the gases at the exhaust (as a result of the increase in temperature of the exhaust gases themselves due to degradation of the ignition advance implemented by the internal combustion engine 1 for the cylinders 3) and has the function of facilitating supercharging in conditions of low flowrate (for example, during a release step).

The electronic control unit 21 is moreover configured for recognizing a substep (comprised within the release step) in which it is possible to deactivate the cylinders 3 one after another, as described more fully in the ensuing treatment.

In particular, stored within the electronic control unit 21 is a flag of deactivation of the cylinders 3, designated by $FLG_{SCAV}$, which basically identifies the condition where the internal combustion engine 1 presents a number of cylinders 3 deactivated as described more fully in the ensuing treatment.

The flag $FLG_{SCAV}$ of deactivation of the cylinders 3 is normally disabled.

According to a first variant, in order for the electronic control unit 21 to enable the flag $FLG_{SCAV}$ of deactivation of the cylinders 3 all the following conditions must be satisfied:

$$FLG_{RIL} = TRUE \; AND \; [CUTOFF = TRUE \; OR \; (N/(N-Ns) \; * \; QAC_{obj} <= QAC_{MAXstim} + \Delta)] \quad [7]$$

where:

$FLG_{RIL}$ is the release flag;
CUTOFF is the flag for the condition where the internal combustion engine 1 is in cut-off, i.e., without generation of (positive) torque;
N is the number of cylinders 3;
$N_s$ is the number of cylinders 3 that do not generate in combustion the objective torque $C_{obj}$ and are actuated only for drawing in a mass of air;
$QAC_{obj}$ is the objective mass of air for each cylinder 3 for supplying the objective torque $C_{obj}$ to the drive wheels, in the case where the cylinders 3 are all involved in the combustion of the respective objective mass of air, basically in the conditions of maximum advance, i.e., with the highest combustion efficiency;
$QAC_{MAXstim}$ is the maximum mass of air for each cylinder 3 in the current conditions of pressure of the intake manifold 4, temperature in the intake manifold 4, etc.; and
$\Delta$ is a tolerance value.

Once the electronic control unit 21 has enabled the flag $FLG_{SCAV}$ of deactivation of the cylinders 3, in order to disable the flag $FLG_{SCAV}$ of deactivation of the cylinders 3 itself, it is sufficient for one of the two following conditions to be satisfied:

$$FLG_{RIL} = FALSE \; AND \; (CUTOFF = FALSE \; OR \; (N/(N-Ns) \; * \; QAC_{obj} > QAC_{MAXstim} + \Delta)] \quad [8]$$

where:

$FLG_{RIL}$ is the release flag;
CUTOFF is the flag identifying the cut-off condition of the internal combustion engine 1;
N is the number of cylinders 3;
$QAC_{obj}$ is the objective mass of air for each cylinder 3 for supplying the objective torque $C_{obj}$ to the drive wheels, in the case where the cylinders 3 are all involved in the combustion of the respective objective mass of air;
$QAC_{MAXstim}$ is the maximum mass of air for each cylinder 3; and
$\Delta$ is a tolerance value.

According to a preferred variant, once the electronic control unit 21 has enabled the flag $FLG_{SCAV}$ of deactivation of the cylinders 3, the electronic control unit 21 itself is configured for controlling the internal combustion engine 1 so as to increase the mass and volumetric flowrate of air and/or exhaust gases that traverse the compressor 14 and the turbine 13 with respect to the air flowrate effectively used by the supercharged internal combustion engine 1 in combustion for generating the desired power.

To implement the aforesaid control strategy, the electronic control unit 21 is pre-arranged for differentiating management of the cylinders 3, in particular, for differentiating the flowrate of air drawn in and air trapped by each cylinder 3, and for differentiating the operating mode.

The strategy envisages generating the objective torque $C_{obj}$ only with a part of the cylinders 3 in the combustion phase, whereas the remaining cylinders 3 draw in as much air as possible. In particular, the electronic control unit 21 is pre-arranged for controlling the supercharged internal combustion engine 1 for operation in normal mode or else in "scavenging" mode, where a significant passage of air from the intake manifold 4 directly into the exhaust duct 10 of the internal combustion engine 1 is envisaged.

Typically, passage of air from the intake manifold 4 directly into the exhaust duct 10 is obtained by means of an appropriate phasing of the intake valves (not illustrated) that connect each cylinder 3 to the intake manifold 4 and of the exhaust valves (not illustrated) that connect each cylinder 3 to the exhaust manifold 5 to enable passage of fresh air directly from the intake manifold 4 to the exhaust manifold 5 and hence into the exhaust duct 10. It is evident that actuation of the intake valves (not illustrated) that connect each cylinder 3 to the intake manifold 4 and of the exhaust valves (not illustrated) that connect each cylinder 3 to the exhaust manifold 5 can be obtained by means of an actuator of a known type, such as, for example, an actuator of a VVT (variable valve timing) type, or else again an electromagnetic or else electro-hydraulic camless actuator.

According to a further variant, the electronic control unit 21 is moreover pre-arranged for controlling the supercharged internal combustion engine 1 so as to increase the mass and volumetric flowrate of air and/or exhaust gases that traverse the compressor 14 and the turbine 13 with respect to the flowrate of air effectively used by the supercharged internal combustion engine 1 in combustion for generating the desired power.

For example, in a supercharged internal combustion engine 1 with four cylinders 3, a configuration is envisaged, hereinafter referred to as "scavenging configuration", in which two cylinders 3 are active and deliver the objective torque $C_{obj}$ drawing in a mass of air that is higher than the mass of air that they would draw in normal operating conditions (namely, in the case where all four cylinders 3 were active, hereinafter referred to as "normal configuration"). The remaining two cylinders 3 are not active and are controlled for drawing in the maximum amount of air, but are not involved in injection and combustion.

In a supercharged internal combustion engine 1 of the type so far described a number N of cylinders 3 are included, where $N_a$ is the number of cylinders 3 active in combustion that generate the objective torque $C_{obj}$ whereas $N_s$ is the number of remaining cylinders 3 that do not generate in combustion the objective torque $C_{obj}$ and are actuated only for drawing in a mass of air. According to a preferred variant, both the number N of cylinders 3 and the number $N_a$ of cylinders 3 active in combustion are even, and it is expedient for them to be in phase in order to limit the oscillations and vibrations that are transmitted to the engine shaft.

Once the electronic control unit 21 has enabled the flag $FLG_{SCAV}$ of deactivation of the cylinders 3, the electronic control unit 21 itself is then configured for controlling the internal combustion engine 1 in such way that a number $N_a$ of active cylinders 3 will generate all the objective torque $C_{obj}$ drawing in the maximum mass $QAC_{MAXstim}$ of air for each of the cylinders 3 of the number $N_a$ of active cylinders 3. The electronic control unit 21 itself is moreover configured for controlling the internal combustion engine 1 in such a way that the number $N_s$ of cylinders 3 inactive in combustion will draw in an amount of air, preferably the maximum amount of air possible. It is evident that it is simple to differentiate the behaviour for each cylinder 3 since the passage of air from the intake manifold 4 directly into the exhaust duct 10 is obtained by means of an appropriate phasing of the intake valves (not illustrated) that connect each cylinder 3 to the intake manifold 4 and of the exhaust valves (not illustrated) that connect each cylinder 3 to the exhaust manifold 5.

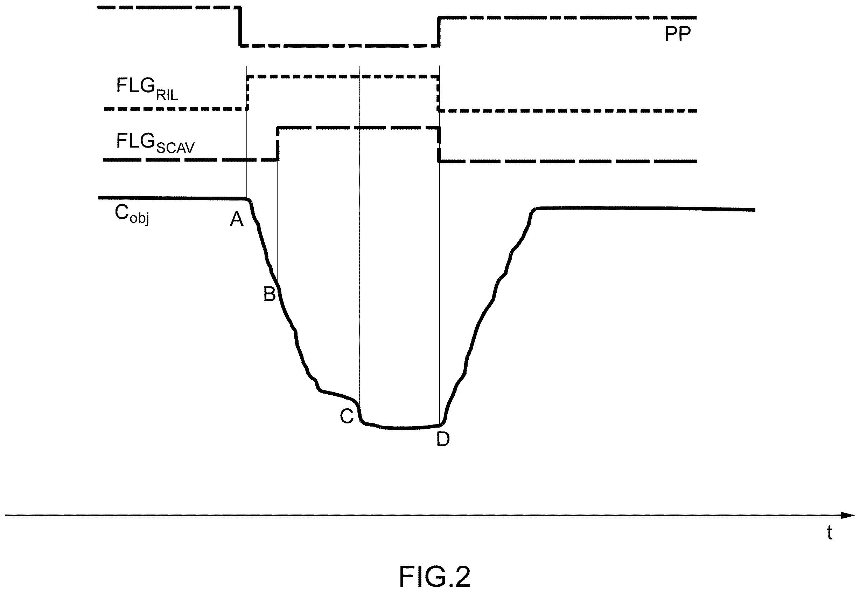

According to what is illustrated more clearly in Figure 2, the objective torque $C_{obj}$ clearly presents a pattern decreasing in time during the release step. In other words, the objective torque $C_{obj}$ decreases progressively during the release step until it reaches the minimum value when the internal combustion engine 1 is in the cut-off condition.

In Figure 2, the point designated by A is the instant when the release flag $FLG_{RIL}$ is enabled. The point designated by B is the instant when the flag $FLG_{SCAV}$ of deactivation of the cylinders 3 that enables virtual scavenging of the internal combustion engine 1 with the cylinders 3 deactivated is enabled and the internal combustion engine 1 presents a number $N_a$ of cylinders 3 active in combustion for generating all the objective torque $C_{obj}$ drawing in substantially (i.e., but for a tolerance threshold) the maximum mass $QAC_{MAXstim}$ of air for each of the cylinders 3 of the number $N_a$ of active cylinders 3. The number $N_s$ of cylinders 3 inactive in combustion are involved so as to draw in an amount of air, preferably the maximum amount $QAC_{MAXstim}$ of air possible. The point designated by C represents the instant when the flag CUTOFF identifying the cut-off condition of the internal combustion engine 1 is enabled and the internal combustion engine 1 presents a number $N_a$ of cylinders 3 active in combustion that is equal to zero, i.e., the number N of cylinders 3 is controlled to draw in an amount of air, preferably the maximum amount of air possible (in other words still, the number

$N_s$ of cylinders 3 inactive in combustion is, in this case, equal to N, i.e., to the number N of cylinders 3); the point designated by D represents the instant when the release flag $FLG_{RIL}$ is disabled, the flag $FLG_{SCAV}$ of deactivation of the cylinders 3 is disabled, and the flag CUTOFF identifying the cut-off condition of the internal combustion engine 1 is disabled. Basically, the point designated by D represents a pickup, i.e., a new demand for torque C.

In the time interval comprised between the points A and B in Figure 2 (i.e., between the instant when the release flag $FLG_{RIL}$ is enabled and the instant when the flag $FLG_{SCAV}$ of deactivation of the cylinders 3 is enabled and the internal combustion engine 1 presents a number $N_a$ of cylinders 3 active in combustion that is smaller than the number N of cylinders 3 for generating all the objective torque $G_{obj}$ drawing in the maximum mass $QAC_{MAXstim}$ of air for each of the cylinders 3 of the number $N_a$ of active cylinders 3) the electronic control unit 21 itself is configured for controlling the internal combustion engine 1 so as to generate a reserve of torque C. Basically, the internal combustion engine 1 is controlled in the interval comprised between the points A and B so as to degrade the ignition advance implemented by the internal combustion engine 1 itself for the cylinders 3 and increase the amount of air drawn in. In this way, there is a consequent increase also in the total flowrate of gases at the exhaust and there is also an increase in the enthalpy of the total flowrate of gases at the exhaust as a result of the degradation of the ignition advance implemented by the internal combustion engine 1.

In the time interval comprised between the points B and C in Figure 2, i.e., between the instant when the flag $FLG_{SCAV}$ of deactivation of the cylinders 3 is enabled and the internal combustion engine 1 presents a number $N_a$ of cylinders 3 active in combustion that is smaller than the number N of cylinders 3 (for generating all the objective torque $C_{obj}$ drawing in the maximum mass $QAC_{MAXstim}$ of air for each of the cylinders 3 of the number $N_a$ of active cylinders 3) and the instant when the flag CUTOFF identifying the cut-off condition of the internal combustion engine 1 is enabled, the number $N_a$ of active cylinders 3 progressively decreases. The number $N_a$ of active cylinders 3 passes in fact from a maximum value (at the instant designated by B) to a minimum value (at the instant designated by C, but this value remains constant throughout the time interval between the points C and D), where the number $N_a$ of cylinders 3 active in combustion is zero.

Instead, in the time interval comprised between the points B and C in Figure 2, i.e., between the instant when the flag $FLG_{SCAV}$ of deactivation of the cylinders 3 is enabled and the internal combustion engine 1 presents a number $N_a$ of cylinders 3 active in combustion smaller than the number N of cylinders 3 (in order to generate all the objective torque $C_{obj}$ drawing in the maximum mass $QAC_{MAXstim}$ of air for each of the cylinders 3 of the number $N_a$ of active cylinders 3) and the instant when the flag CUTOFF identifying the cut-off condition of the internal combustion engine 1 is enabled, the number $N_s$ of cylinders 3 inactive in combustion progressively increases. The number $N_s$ of cylinders 3 inactive in combustion passes in fact from a minimum value (at the instant designated by B) to a maximum value (at the instant designated by C, but this value remains constant throughout the time interval comprised between the points C and D), where the number $N_s$ of cylinders 3 inactive in combustion is equal to the number N of cylinders 3.

In the time interval comprised between the points B and C in Figure 2, the cylinders 3 are then deactivated as a function of the objective torque $C_{obj}$; i.e., the electronic control unit 21 is configured so that the number $N_a$ of active cylinders 3 will in any case always be able to supply the objective torque $C_{obj}$ to the drive wheels.

In other words still, in the time interval comprised between the points B and C in Figure 2, the cylinders 3 are then deactivated one after another, so that the number $N_a$ of active cylinders 3 will in any case always be able to supply the objective torque $C_{obj}$ to the drive wheels. In the time interval comprised between the points B and C in Figure 2, to a reduction of the objective torque $C_{obj}$ required by the drive wheels there also corresponds a progressive reduction of the number $N_a$ of active cylinders 3.

Starting from the instant (designated by D in Figure 2) when the release flag $FLG_{RIL}$ is disabled, the flag $FLG_{SCAV}$ of deactivation of the cylinders 3 is disabled, and the flag CUTOFF identifying the cut-off condition of the internal combustion engine 1 is disabled following upon a demand for torque C, the number $N_s$ of cylinders 3 inactive in combustion starts to decrease and the number $N_a$ of active cylinders 3 starts to increase (in some cases, it may already be right from the start equal to N, i.e., to the number N of cylinders 3 in the case of a demand for torque C that is rather high) in order to reach the objective torque $C_{obj}$.

In the interval comprised between C and D, i.e., between the instant when the flag CUTOFF identifying the cut-off condition of the internal combustion engine 1 is enabled and the internal combustion engine 1 presents a number $N_a$ of cylinders 3 active in combustion that is equal to zero and the instant when the release flag $FLG_{RIL}$ is disabled, the flag $FLG_{SCAV}$ of deactivation of the cylinders 3 is disabled, and the flag CUTOFF identifying the cut-off condition of the internal combustion engine 1 is disabled, the objective engine torque $C_{obj}$ presents the minimum value and is equal to the friction and pumping torque $C_{friction}$.

In the interval comprised between B and D, i.e., between the instant when the flag $FLG_{SCAV}$ of deactivation of the cylinders 3 is enabled and the internal combustion engine 1 presents a number $N_a$ of cylinders 3 active in combustion smaller than the number N of cylinders 3 (in order to generate all the objective torque $C_{obj}$ drawing in the maximum mass $QAC_{MAxstim}$ of air for each of the cylinders 3 of the number $N_a$ of active cylinders 3) and the instant when the release flag $FLG_{RIL}$ is disabled, the flag $FLG_{SCAV}$ of deactivation of the cylinders 3 is disabled, and the flag CUTOFF identifying the cut-off condition of the internal combustion engine 1 is disabled following upon a demand for torque C, the internal combustion engine 1 is controlled in the so-called "scavenging configuration" of the cylinders 3, where a progressively decreasing number $N_a$ of cylinders 3 active for injection and combustion generates the total objective torque $C_{obj}$ and a progressively increasing number $N_s$ of cylinders 3 inactive for injection and combustion draws in a mass of air, preferably the maximum amount of air possible, up to the end of the release step of the supercharged internal combustion engine 1.

According to mutually alternative variants, the wastegate valve 16, which is designed to regulate the flowrate of the exhaust gases that flow through the bypass duct 15, can be controlled dynamically, or else the wastegate valve 16 is driven into a closed state to maximize the power in the turbine 13, i.e., the speed of rotation of the turbocharger 12, or else the wastegate valve 16 is controlled at an intermediate, and preferably constant, value of closing comprised between 0% and 100%.

At the instant (designated by D in Figure 2) when the release flag $FLG_{RIL}$ is disabled, the flag $FLG_{SCAV}$ of deactivation of the cylinders 3 is disabled, and the flag CUTOFF identifying the cut-off condition of the internal combustion engine 1 is disabled following upon a demand for torque C, the number $N_a$ of active cylinders 3 is again other than zero (and in any case smaller than or equal to the number N of cylinders 3) to provide the objective torque $C_{obj}$, the blow-off valve 19, which is designed to regulate the flowrate of the air that flows through the bypass duct 18, is driven into a closed state for an interval $\Delta t$ of pre-set, and preferably constant, duration. In particular, the duration of the interval $\Delta t$ is determined in a preliminary adjustment and set-up step of the control unit 21.

According to a variant, the blow-off valve 19, designed to regulate the flowrate of the air that flows through the bypass duct 18, is driven into a closed state throughout the release step, i.e., in the time interval comprised between the instants A and D appearing in Figure 2, that is, for all the time during which the release flag $FLG_{RIL}$ is enabled and, in addition, for a further interval $\Delta t$ of pre-set, and preferably constant, duration starting from the instant D when the release flag $FLG_{RIL}$ is disabled. In particular, the duration of the interval $\Delta t$ is determined in a preliminary adjustment and set-up step of the control unit 21.

According to a preferred variant, when the flag $FLG_{SCAV}$ of deactivation of the cylinders 3 is enabled, the control unit 21 disables (where present) also the closed-loop control carried out by a lambda probe on the titre of the mix of gases at the exhaust.

According to a preferred variant, when the flag $FLG_{SCAV}$ of deactivation of the cylinders 3 is enabled, the control unit 21 disables (where present) also the diagnosis of possible phenomena of misfire.

Described hereinafter is the control strategy implemented by the electronic control unit 21 during a release manoeuvre and up to the next demand for torque C in the case where, according to a further variant, the vehicle is provided with an internal combustion engine 1 according to the foregoing treatment and a servo-assisted mechanical gear shift, or else a robotized manual gear shift, better known as "automated manual transmission" (AMT), or else a manual gear shift.

The electronic control unit 21 is configured for recognizing a release step, i.e., for verifying the condition in which the driver takes his foot off the accelerator pedal, thus interrupting the demand for torque C to be transmitted to the drive wheels. In particular, within the electronic control unit 21 a release flag is stored, designated by $FLG_{RIL}$, which basically identifies when a release manoeuvre is in progress.

In particular, the release flag $FLG_{RIL}$ is enabled throughout the release manoeuvre up to the next demand for torque C.

The release flag $FLG_{RIL}$ is normally disabled.

According to a first variant, in order for the electronic control unit 21 to enable the release flag $FLG_{RIL}$ one of the following conditions must be satisfied:

$$dC_{obj} < TV_1 \text{ OR } FLG_{GEAR\_SHIFT} = TRUE \quad [9]$$

where:

$dC_{obj}$ is the first time derivative of the objective torque $C_{obj}$;
$TV_1$ is a threshold value; and
$FLG_{GEAR\_SHIFT}$ is the gear-shift flag that will be described more fully hereinafter;
The threshold value $TV_1$, which is determined in a preliminary adjustment and set-up step, is preferably constant and less than zero. The gear-shift flag $FLG_{GEAR\_SHIFT}$ is enabled and disabled by the control unit 21 according to the selection made by the servo-assisted mechanical gear shift, or AMT, or manual gear shift.

Once the electronic control unit 21 has enabled the release flag $FLG_{RIL}$, in order to disable the release flag $FLG_{RIL}$ itself, the following condition must be satisfied:

$$C_{obj} > TV_2 \quad [10]$$

where:

$C_{obj}$ is the objective torque; and
$TV_2$ is a threshold value.

The threshold value $TV_2$, which is determined in a preliminary adjustment and set-up step, is preferably constant and is greater than zero.

According to a second variant, in order for the electronic control unit 21 to enable the release flag $FLG_{RIL}$, one of the following conditions must be satisfied:

$$((dC_{obj} < TV_1) \text{ AND } (dPP < TV_3)) \text{ OR } FLG_{GEAR\_SHIFT} = TRUE \quad [11]$$

where:

$dC_{obj}$ is the first time derivative of the objective torque $C_{obj}$;
$dPP$ is the first time derivative of the position of the accelerator pedal;
$FLG_{GEAR\_SHIFT}$ is the gear-shift flag;
$TV_1$ is a threshold value; and
$TV_3$ is a threshold value.

The threshold value $TV_1$ and the threshold value $TV_3$, which are determined in a preliminary adjustment and set-up step, are preferably constant and less than zero, and the gear-shift flag $FLG_{GEAR\_SHIFT}$ is enabled and disabled by the control unit 21 according to the selection made by the servo-assisted mechanical gear shift, or AMT, or manual gear shift.

Once the electronic control unit 21 has enabled the release flag $FLG_{RIL}$, in order to disable the release flag $FLG_{RIL}$ itself, one of the following conditions must be satisfied:

$$(C_{obj} > TV_2) \text{ OR } ((PP > TV_4) \text{ AND } (dPP > TV_5)) \quad [12]$$

where:

$C_{obj}$ is the objective torque;
$PP$ is the position of the accelerator pedal;
$dPP$ is the first time derivative of the position of the accelerator pedal;
$TV_2$ is a threshold value;
$TV_4$ is a threshold value; and
$TV_5$ is a threshold value.

The threshold value $TV_2$, the threshold value $TV_4$, and the threshold value $TV_5$, which are determined in a preliminary adjustment and set-up step, are preferably constant and greater than zero.

According to a third variant, in order for the electronic control unit 21 to enable the release flag $FLG_{RIL}$, one of the following conditions must be satisfied:

$$((dC_{obj} < TV_1) \text{ AND } (dPP < TV_3) \text{ AND } (C_{obj} > f(V))) \text{ OR } FLG_{GEAR\_SHIFT} = TRUE \quad [13]$$

where:

$dC_{obj}$ is the first time derivative of the objective torque $C_{obj}$;
$C_{obj}$ is the objective torque;
$V$ is the speed of the vehicle;
$dPP$ is the first time derivative of the position of the accelerator pedal;
$FLG_{GEAR\_SHIFT}$ is the gear-shift flag;

$TV_1$ is a threshold value; and
$TV_3$ is a threshold value.

The threshold value $TV_1$ and the threshold value $TV_3$, which are determined in a preliminary adjustment and set-up step, are preferably constant and less than zero. The gear-shift flag $FLG_{GEAR\_SHIFT}$ is enabled and disabled by the control unit 21 according to the selection made by the servo-assisted mechanical gear shift, or AMT, or manual gear shift.

Once the electronic control unit 21 has enabled the release flag $FLG_{RIL}$, in order to disable the release flag $FLG_{RIL}$ itself, one of the following conditions must be satisfied:

$$(C_{obj} > TV_2) \text{ OR } ((PP > TV_4) \text{ AND } (dPP > TV_5)) \quad [14]$$

where:

$C_{obj}$ is the objective torque;
$PP$ is the position of the accelerator pedal;
$dPP$ is the first time derivative of the position of the accelerator pedal;
$TV_2$ is a threshold value;
$TV_4$ is a threshold value; and
$TV_5$ is a threshold value.

The threshold value $TV_2$, the threshold value $TV_4$, and the threshold value $TV_5$, which are determined in a preliminary adjustment and set-up step, are preferably constant and greater than zero.

According to a further variant, fuel is injected into the number $N_s$ of cylinders 3 inactive for injection and combustion.

According to a variant, the mass of air drawn in by the cylinders 3 is regulated by means of the throttle valve 8 and possibly by an actuator of a VVT type.

Described hereinafter is the control strategy implemented in this case by the electronic control unit 21 during a release manoeuvre and up to the next demand for torque C.

The electronic control unit 21 is configured for recognizing a release step, i.e., for verifying the condition in which the driver takes his foot off the accelerator pedal, thus interrupting the demand for torque C to be transmitted to the drive wheels.

In particular, within the electronic control unit 21 a release flag is computed, designated by $FLG_{RIL}$, which basically identifies when a release manoeuvre is in progress. In particular, the release flag $FLG_{RIL}$ is enabled throughout the release manoeuvre up to the next demand for torque C.

The release flag $FLG_{RIL}$ is normally disabled.

According to a first variant, in order for the electronic control unit 21 to enable the release flag $FLG_{RIL}$, the following condition must be satisfied:

$$dC_{obj} < TV_1 \quad [15]$$

where:

$dC_{obj}$ is the first time derivative of the objective torque $C_{obj}$; and
$TV_1$ is a threshold value.

The threshold value $TV_1$, which is determined in a preliminary adjustment and set-up step, is preferably constant and less than zero.

Once the electronic control unit 21 has enabled the release flag $FLG_{RIL}$, in order to disable the release flag $FLG_{RIL}$ itself, the following condition must be satisfied:

$$C_{obj} > TV_2 \quad [16]$$

where:

$C_{obj}$ is the objective torque; and
$TV_2$ is a threshold value.

The threshold value $TV_2$, which is determined in a preliminary adjustment and set-up step, is preferably constant and greater than zero.

According to a second variant, in order for the electronic control unit 21 to enable the release flag $FLG_{RIL}$, both the following conditions must be satisfied:

$$(dC_{obj} < TV_1) \text{ AND } (dPP < TV_3) \quad [17]$$

where:

$dC_{obj}$ is the first time derivative of the objective torque $C_{obj}$; dPP is the first time derivative of the position of the accelerator pedal;
$TV_1$ is a threshold value; and
$TV_3$ is a threshold value.

The threshold value $TV_1$ and the threshold value $TV_3$, which are determined in a preliminary adjustment and set-up step, are preferably constant and less than zero.

Once the electronic control unit 21 has enabled the release flag $FLG_{RIL}$, in order to disable the release flag $FLG_{RIL}$ itself, one of the following conditions must be satisfied:

$$(C_{obj} > TV_2) \text{ OR } ((PP > TV_4) \text{ AND } (dPP > TV_5)) \quad [18]$$

where:

$C_{obj}$ is the objective torque;
PP is the position of the accelerator pedal;
dPP is the first time derivative of the position of the accelerator pedal;
$TV_2$ is a threshold value;
$TV_4$ is a threshold value; and
$TV_5$ is a threshold value.

The threshold value $TV_2$, the threshold value $TV_4$, and the threshold value $TV_5$, which are determined in a preliminary adjustment and set-up step, are preferably constant and greater than zero.

The check on the position PP of the accelerator pedal and on the first time derivative dPP of the position of the accelerator pedal makes it possible to prevent slight and rapid action of the driver on the accelerator pedal from yielding an erroneous and undesired disabling of the release flag $FLG_{RIL}$ when, in actual fact, the release step is still in progress.

According to a third variant, in order for the electronic control unit 21 to enable the release flag $FLG_{RIL}$, all the following conditions must be satisfied:

$$(dC_{obj} < TV_1) \text{ AND } (dPP < TV_3) \text{ AND } (C_{obj} > f(V)) \quad [19]$$

where:

$dC_{obj}$ is the first time derivative of the objective torque $C_{obj}$;
$C_{obj}$ is the objective torque;
V is the speed of the vehicle;
dPP is the first time derivative of the position of the accelerator pedal;
$TV_1$ is a threshold value; and
$TV_3$ is a threshold value.

The threshold value $TV_1$ and the threshold value $TV_3$, which are determined in a preliminary adjustment and set-up step, are preferably constant and less than zero.

Once the electronic control unit 21 has enabled the release flag $FLG_{RIL}$, in order to disable the release flag

$FLG_{RIL}$ itself, one of the following conditions must be satisfied:

$$(C_{obj} > TV_2) \ OR \ ((PP > TV_4) \ AND \ (dPP > TV_5)) \ [20]$$

where:

$C_{obj}$ is the objective torque;
PP is the position of the accelerator pedal;
dPP is the first time derivative of the position of the accelerator pedal;
$TV_2$ is a threshold value;
$TV_4$ is a threshold value; and
$TV_5$ is a threshold value.

The threshold value $TV_2$, the threshold value $TV_4$, and the threshold value $TV_5$, which are determined in a preliminary adjustment and set-up step, are preferably constant and greater than zero.

In this case, the further condition where the objective torque $C_{obj}$ must be greater than a value determined as a function of the speed of the vehicle itself makes it possible to rule out the possibility of an undesired enabling of the release flag $FLG_{RIL}$ in low-load conditions.

According to a preferred variant, once the electronic control unit 21 has enabled the release flag $FLG_{RIL}$, the electronic control unit 21 itself is configured for controlling the internal combustion engine 1 so as to generate a reserve of torque C. Basically, the supercharged internal combustion engine 1 is controlled so as to degrade the ignition advance implemented by the internal combustion engine 1 itself for the cylinders 3. In this way, it is possible to adjust the pressure $P_{cr}$ in the intake manifold to a value greater than what would be obtained in optimal conditions of ignition advance implemented by the internal combustion engine 1 for the cylinders 3.

Computed within the electronic control unit 21 is the flag of deactivation of the cylinders 3, designated by $FLG_{SCAV}$, which identifies the condition where the internal combustion engine 1 presents a number of deactivated cylinders 3, as described more fully in the ensuing treatment.

The flag $FLG_{SCAV}$ of deactivation of the cylinders 3 is normally disabled.

According to a first variant, in order for the electronic control unit 21 to enable the flag $FLG_{SCAV}$ of deactivation of the cylinders 3, all the following conditions must be satisfied:

$$FLG_{RIL} = TRUE \ AND \ [CUTOFF = TRUE \ OR \ (N/(N- \ Ns) \ * \ QAC_{obj} \ <= \ QAC_{MAXstim})] \ [21]$$

where:

$FLG_{RIL}$ is the release flag;
CUTOFF is the flag identifying the cut-off condition of the internal combustion engine 1;
N is the number of cylinders 3;
$N_s$ is the number of cylinders 3 that do not generate in combustion the objective torque $C_{obj}$ and are actuated only to draw in a mass of air;
$QAC_{obj}$ is the objective mass of air for each cylinder 3 for supplying the objective torque $C_{obj}$ to the drive wheels, in the case where the cylinders 3 are all involved in the combustion of the respective objective mass of air; and
$QAC_{MAXstin}$, is the maximum mass of air for each cylinder 3.

Once the electronic control unit 21 has enabled the flag $FLG_{SCAV}$ of deactivation of the cylinders 3, in order to disable the flag $FLG_{SCAV}$ of deactivation of the cylinders 3 itself, it is sufficient for one of the two following conditions to be satisfied:

$$FLG_{RIL} = FALSE \ AND \ (CUTOFF = FALSE \ OR \ (QAC_{obj} > QAC_{MAXstim} \ * \ 2/N)) \ [22]$$

where:

$FLG_{RIL}$ is the release flag;
CUTOFF is the flag identifying the cut-off condition of the internal combustion engine 1;

N is the number of cylinders 3;

$QAC_{obj}$ is the objective mass of air for each cylinder 3 for supplying the objective torque $C_{obj}$ to the drive wheels, in the case where the cylinders 3 are all involved in the combustion of the respective objective mass of air; and

$QAC_{MAXstim}$ is the maximum mass of air for each cylinder 3.

As soon as the flag $FLG_{SCAV}$ of deactivation of the cylinders 3 is enabled, the electronic control unit 21 is pre-arranged for supplying the objective torque $C_{obj}$ (which, also in this case, has a decreasing pattern starting from the instant when the flag $FLG_{SCAV}$ of deactivation of the cylinders 3 is enabled) with a number $N_a$ of cylinders 3 active in combustion that is smaller than the number N of cylinders 3. In particular, one cylinder 3 at a time is turned off and/or deactivated in combustion at the moment when the remaining cylinders 3 are in any case able to guarantee the objective torque $C_{obj}$. In other words still, the internal combustion engine 1 is configured in such a way that, when the flag $FLG_{SCAV}$ of deactivation of the cylinders 3 is enabled, the cylinders 3 will be deactivated one after another in such a way that the number $N_a$ of cylinders 3 active in combustion will always be able to guarantee the objective torque $C_{obj}$. For the number $N_a$ of cylinders 3 active in combustion, the electronic control unit 21 is configured for implementing an ignition advance that will guarantee the required torque C.

Moreover, simultaneously the electronic control unit 21 is pre-arranged for maintaining an effective supercharging pressure $P_{obj}$ higher than the minimum objective supercharging pressure $P_{min}$ that is able to guarantee the objective load, preferably equal to the value of maximum objective supercharging pressure $P_{max}$ that will guarantee the objective load, i.e., the mass of air necessary for the internal combustion engine 1 to generate the objective torque $C_{obj}$.

In detail, the electronic control unit 21 is configured for determining a value of minimum objective supercharging pressure $P_{min}$ and a value of maximum objective supercharging pressure $P_{max}$ that will guarantee the objective load. The difference between the value of maximum objective supercharging pressure $P_{max}$ and the value of minimum objective supercharging pressure $P_{min}$ defines a maximum supercharging reserve $RDS_{max}$.

The effective supercharging pressure $P_{obj}$ is maintained higher than the minimum objective supercharging pressure $P_{min}$ and equal to a value comprised within the interval of values defined by the maximum supercharging reserve $RDS_{max}$ and preferably equal to the maximum objective supercharging pressure $P_{max}$. By so doing, it is possible to define an effective supercharging reserve RDS that is equal to the algebraic difference between the effective supercharging pressure $P_{obj}$ and the minimum objective supercharging pressure $P_{min}$.

At the moment when the flag CUTOFF for identifying the cut-off condition of the internal combustion engine 1 is enabled, the motor-driven throttle valve 8 is completely opened in such a way as to draw in the maximum amount of air possible and, consequently, obtain the maximum flowrate at the turbocharger 12.

In the case where, at the end of the step of cut-off of the internal combustion engine 1 or in any case of pickup, the objective torque $C_{obj}$ required is low, it is necessary to implement one or a combination of the following control strategies for generating the objective torque $C_{obj}$:

- controlling just a portion of the cylinders 3 to provide the total objective torque $C_{obj}$;
- controlling just one cylinder 3 in combustion or a portion of the cylinders 3 every given number W of engine cycles until it is possible to control other cylinders 3 to provide the total objective torque $C_{obj}$ for each engine cycle;
- controlling the motor-driven throttle valve 8 to reduce the intake pressure and hence the mass of air for the combustion, then waiting for the pressure to decrease until it is possible to implement the total objective torque $C_{obj}$ with a reduced number of cylinders 3; and
- in order to cause the pressure to decrease more rapidly so as to be able to implement the total objective torque $C_{obj}$ with a reduced number of cylinders 3, opening the blow-off valve 19, which is designed to regulate the flowrate of the air that flows through the bypass duct 18 in order to reduce the intake pressure and hence the mass of air for combustion.

According to mutually alternative variants, the throttle valve 8 is controlled so that it is at least partially open during the release step of the supercharged internal combustion engine 1. According to a further variant, the throttle valve 8 is controlled so that it is completely open during the release step of the supercharged internal combustion engine 1.

Described hereinafter is the control strategy implemented by the electronic control unit 21 during a gear-shift step in the case where, according to a preferred variant, the vehicle is provided with an internal combustion engine 1 according to the foregoing treatment and with a servo-assisted mechanical gear shift, or AMT, or a manual gear shift.

The electronic control unit 21 is configured for recognizing a gear-shift step, i.e., more in detail, for verifying the condition where the servo-assisted mechanical gear shift or AMT or manual gear shift changes gear as a result of intervention of the driver who acts on a lever similar to the traditional one of a gear shift or on pushbuttons set on the steering wheel for selecting the transmission ratio, or else as a result of the command of the electronic control unit 21, according to whether the operating mode is manual or else automatic, respectively.

In particular, computed within the electronic control unit 21 is the gear-shift flag $FLG_{GEAR\_SHIFT}$ that basically identifies when a gear shift is about to take place.

The gear-shift flag $FLG_{GFAR\_SHIFT}$ is normally disabled.

The gear-shift flag $FLG_{GEAR\_SHIFT}$ is enabled by the control unit 21 at the moment when the driver intervenes on a lever similar to the traditional one of a gear shift or else on pushbuttons set on the steering wheel for selecting the transmission ratio or else following upon the command issued by the electronic control unit 21 for selection of the transmission ratio.

The gear-shift flag $FLG_{GEAR\_SHIFT}$ is enabled throughout the gear-shift step up to the next demand for torque C.

According to a first variant, the gear-shift flag $FLG_{GEAR\_SHIFT}$ is disabled by the control unit 21 at the moment when the clutch is closed following upon the gear-shift step. According to a second variant, the gear-shift flag $FLG_{GEAR\_SHIFT}$ is disabled by the control unit 21 at the moment when the clutch is closed following upon the gear-shift step, and simultaneously, in order for the electronic control unit 21 to disable the gear-shift flag $FLG_{GEAR\_SHIFT/}$ also the following condition must be satisfied:

$$dC_{obj} < TV_{GEAR\_SHIFT} \quad [23]$$

where:

$C_{obj}$ is the objective torque; and
$TV_{GEAR\_SHIFT}$ is a threshold value.

The threshold value $TV_{GEAR\_SHIFT}$, which is determined in a preliminary adjustment and set-up step, is preferably constant and greater than zero.

Throughout the time interval during which the gear-shift flag $FLG_{GEAR\_SHIFT}$ is enabled, the electronic control unit 21 is configured for maintaining an effective supercharging pressure $P_{obj}$ higher than the minimum objective supercharging pressure $P_{min}$ that is able to guarantee the objective load, preferably equal to the value of maximum objective supercharging pressure $P_{max}$ that is able to guarantee the objective load, i.e., the mass of air necessary for the internal combustion engine 1 to generate the objective torque $C_{obj}$.

In detail, the electronic control unit 21 is configured for determining a value of minimum objective supercharging pressure $P_{min}$ and a value of maximum objective supercharging pressure $P_{max}$ that will guarantee the objective load. The difference between the value of maximum objective supercharging pressure $P_{max}$ and the value of minimum objective supercharging pressure $P_{min}$ defines a maximum supercharging reserve $RDS_{max}$.

The effective supercharging pressure $P_{obj}$ is maintained higher than the minimum objective supercharging pressure $P_{min}$ and equal to a value comprised within the interval of values defined by the maximum supercharging reserve $RDS_{max}$ and preferably equal to the maximum objective supercharging pressure $P_{max}$. By so doing, it is possible to define an effective supercharging reserve RDS, which is equal to the algebraic difference between the effective supercharging pressure $P_{obj}$ and the minimum objective supercharging pressure $P_{min}$.

Moreover, throughout the time interval during which the gear-shift flag $FLG_{GEAR\_SHIFT}$ is enabled, the electronic control unit 21 is also configured for controlling the internal combustion engine 1 so as to generate a reserve of torque C. Basically, the objective torque $C_{obj}$ is reduced by degrading the ignition advance implemented by the internal combustion engine 1 for the cylinders 3. In this way, it is possible to increase the mass of air drawn in and adjust the pressure $P_{cr}$ in the intake manifold 4 to a value greater than the one that would be obtained in optimal conditions of ignition advance implemented by the internal combustion engine 1 for the cylinders 3. In this way, it is possible to obtain a higher flowrate and a greater supercharging.

It should be pointed out that, according to a preferred variant, in the foregoing treatment the first time derivative $dC_{obj}$ of the objective torque $C_{obj}$ (and, in a similar way any other differentiated quantity) is calculated in the electronic control unit 21 as the difference of the quantity involved, i.e., the objective torque $C_{obj}$, minus the value filtered (preferably by means of a first-order filter) of the quantity itself, i.e., of the objective torque $C_{obj}$.

It is hence possible to envisage: identifying start of a gear-shift step at the moment when the driver intervenes on a gear-shift lever or else at the moment when the driver acts on pushbuttons set on the steering wheel for selecting the transmission ratio or else again as a function of the command for selection of the transmission ratio, or else identifying start of a release step; and throughout the gear-shift step or else throughout the release step of the supercharged internal combustion engine 1, obtaining a total objective torque $C_{obj}$ by degrading the ignition advance implemented by the supercharged internal combustion engine 1 for the cylinders 3 and by increasing the mass of air trapped in the cylinders 3 themselves. In the case of a manual gear shift, the gear-shift step is recognized by means of the gear-shift lever, or of clutch opening/closing, or of the ratio between engine r.p.m. and the vehicle speed.

In general, in the release manoeuvre it is hence possible to generate reserve of torque (by supplying more air and degrading the ignition advance), in order to increase the flowrate of air and the enthalpy of gases at the exhaust, even without virtual scavenging (in the presence of cylinders 3 deactivated).

**Claims**

1. A method for controlling, during a release step, a internal combustion engine (1) supercharged by means of a turbocharger (12) provided with a turbine (13) and a compressor (14); the internal combustion engine (1) further comprising a number (N) of cylinders (3), which are connected to an intake manifold (4) from which they receive fresh air and to an exhaust manifold (5) introduced into which are the exhaust gases produced by combustion; the supercharged internal combustion engine (1) further comprising a wastegate valve (16), which is designed to regulate the flowrate of the exhaust gases, and a blow-off valve (19), which is designed to regulate the flowrate of the air that flows through a bypass duct (18), which is connected in parallel to the compressor (14); the supercharged internal combustion engine (1) being moreover pre-arranged for enabling passage of air that does not participate in the combustion within the cylinders (3) from the intake manifold (4) directly into the exhaust duct (10) ;
the control method comprising the steps of:
recognizing the instant of start of a release step of the supercharged internal combustion engine (1); wherein the release step of the supercharged internal combustion engine (1) begins when the following condition is satisfied:

$$dC_{obj} \; < \; TV_1 \; [1]$$

where:

$dC_{obj}$ is the first time derivative of the total objective torque ($C_{obj}$); and
$TV_1$ is a first threshold value.
determining the profile of total torque ($C_{obj}$) to be supplied for operation of the supercharged internal combustion engine (1) during the release step of the supercharged internal combustion engine (1); and
dividing the release step of the supercharged internal combustion engine (1) into a first substep and a second substep; wherein controlling the supercharged internal combustion engine (1) during the first substep for obtaining the profile of total torque ($C_{obj}$) by degrading the ignition advance implemented by the supercharged internal combustion engine (1) for the cylinders (3) and by increasing the mass of air drawn in by the cylinders (3); and wherein the first substep is comprised between the start of the release step and the instant when the supercharged internal combustion engine (1) is in a cut-off condition, i.e., in the absence of combustion, or else between the start of the release step and the instant when the following condition is satisfied:

$$N/(N \; - \; N_s) \; * \; QAC_{obj} \; <= \; QAC_{MAXstim} \; + \; \Delta$$

where:

N is the number of cylinders (3);
$N_s$ is the number of cylinders (3) inactive for combustion;
$QAC_{obj}$ is the objective mass of air for each cylinder (3) for supplying the total torque ($C_{obj}$) to the drive wheels, in the case where the cylinders (3) are all involved in the combustion of the respective objective mass of air;
$\Delta$ is the tolerance value; and
$QAC_{MAXstim}$ is the maximum mass of air that can be trapped for each cylinder (3);
and wherein controlling the supercharged internal combustion engine (1) during the second substep through a number ($N_a$) of cylinders (3) active for injection and combustion with which to generate the profile of total torque ($C_{obj}$) and a number ($N_s$) of cylinders (3) inactive for injection and combustion that draw in the maximum amount of air possible; wherein the second substep is comprised between the end of the first substep and the end of the release step of the supercharged internal combustion engine (1); and wherein both the number ($N_a$) of cylinders (3) active for injection and combustion and the number ($N_s$) of cylinders (3) inactive for injection and combustion is variable during the second substep; and
adjusting the wastegate valve (16) and keeping the blow-off valve (19) closed throughout the release step of the supercharged internal combustion engine (1) and for a time interval ($\Delta t$) of pre-set, and preferably constant, duration starting from the instant when the release step of the supercharged internal combustion engine (1) terminates.

2. A control method according to any one of the preceding claims, wherein each of the cylinders (3) is connected to the intake manifold (4) via at least one respective intake valve and to the exhaust manifold (5) via at least one respective exhaust valve; and wherein the intake valves are actuated in an independent way for each of the cylinders (3).

3. A control method according to any one of the preceding claims, wherein the internal combustion engine (1) comprises a throttle valve (8), which is designed to regulate the mass of air drawn in by the number (N) of cylinders (3) and is at least partially open when the supercharged internal combustion engine (1) is in the cut-off condition.

4. A control method according to claim 3, wherein the throttle valve (8) is completely open when the supercharged internal combustion engine (1) is in the cut-off condition.

5. A control method according to any one of the preceding claims and comprising the further step of adjusting the wastegate valve (16) in such a way that it will be partially open throughout the release step of the supercharged internal combustion engine (1).

6. A control method according to any one of the preceding claims and comprising the further steps of:

determining a minimum supercharging pressure ($Pt_{min}$) such as to guarantee the total objective torque ($C_{obj}$); and obtaining an effective supercharging pressure ($P_{obj}$) higher than the minimum supercharging pressure ($Pt_{min}$) up to the end of the release step of the supercharged internal combustion engine (1).

7. A control method according to claim 6 and comprising the further steps of:

determining a maximum supercharging pressure ($Pt_{max}$) such as to guarantee the total objective torque ($C_{obj}$); and obtaining an effective supercharging pressure ($P_{obj}$) equal to the maximum supercharging pressure ($Pt_{max}$) up to the end of the release step of the supercharged internal combustion engine (1) .

8. A control method according to any one of claims 1 to 5 and comprising the further step of keeping the wastegate valve (16) closed throughout the release step of the supercharged internal combustion engine (1).

9. A control method according to any one of the preceding claims, wherein the number ($N_a$) of cylinders (3) active for injection and combustion is even and, preferably, the cylinders are in phase.

10. A control method according to any one of the preceding claims, wherein the supercharged internal combustion engine (1) comprises a servo-assisted mechanical gear shift or else a robotized manual gear shift or AMT (automated manual transmission) or else a manual gear shift; and wherein the method envisages determining the instant of start of a release step of the supercharged internal combustion engine (1) according to the moment when the driver intervenes on a gear-shift lever or else on pushbuttons set on the steering wheel for selecting the transmission ratio or else again as a function of the command of selection of the transmission ratio.

11. A control method according to any one of the preceding claims, wherein the release step of the supercharged internal combustion engine (1) terminates when the following condition is satisfied:

$$C_{obj} > TV_2 \quad [2]$$

where:

$C_{obj}$ is the objective torque; and
$TV_2$ is a second threshold value.

12. A control method according to any one of claims 1 to 10, wherein the release step of the supercharged internal combustion engine (1) terminates when the following condition is satisfied:

$$(C_{obj} > TV_2) \ OR \ ((PP > TV_4) \ AND \ (dPP > TV_5)) \quad [4]$$

where:

$C_{obj}$ is the objective torque;
PP is the position of the accelerator pedal;
dPP is the first time derivative of the position of the accelerator pedal;
$TV_2$ is a second threshold value;
$TV_4$ is a fourth threshold value; and
$TV_5$ is a fifth threshold value.

13. A control method according to any one of preceding claims, wherein the first value ($TV_1$), which is determined in a preliminary adjustment and set-up step, is preferably constant and less than zero; and wherein the second value ($TV_2$), the fourth value ($TV_4$), and the fifth value ($TV_5$), which are determined in a preliminary adjustment and set-up step, are preferably constant and greater than zero.

14. A control method according to any one of the preceding claims, wherein fuel is injected into the number ($N_s$) of cylinders (3) inactive for injection and combustion.

**Patentansprüche**

1. Verfahren zum Steuern/Regeln eines Verbrennungsmotors (1), der mittels eines mit einer Turbine (13) und einem Kompressor (14) versehenen Turboladers (12) aufgeladen wird, während eines Freigabeschritts; wobei der Verbrennungsmotor (1) ferner eine Anzahl (N) von Zylindern (3) aufweist, die mit einem Ansaugkrümmer (4), von dem sie Frischluft erhalten, und mit einem Auspuffkrümmer (5), in den die durch die Verbrennung erzeugten Abgase eingeleitet werden, verbunden sind; wobei der aufgeladene Verbrennungsmotor (1) ferner ein Überströmventil (16), das dazu ausgelegt ist, die Durchflussmenge der Abgase zu regeln, und ein Abblaseventil (19) umfasst, das dazu ausgelegt ist, die Durchflussmenge der Luft zu regeln, die durch einen parallel zu dem Kompressor (14) angeschlossenen Umgehungskanal (18) strömt; wobei der aufgeladene Verbrennungsmotor (1) ferner dafür eingerichtet ist, einen Durchgang von Luft, die nicht an der Verbrennung in den Zylindern (3) teilnimmt, von dem Einlasskrümmer (4) direkt in den Auslasskanal (10) zu ermöglichen;
wobei das Steuer/Regelverfahren die Schritte umfasst:
Erkennen des Zeitpunkts des Beginns eines Freigabeschritts des aufgeladenen Verbrennungsmotors (1); wobei der Freigabeschritt des aufgeladenen Verbrennungsmotors (1) beginnt, wenn die folgende Bedingung erfüllt ist:

$$dC_{obj} < TV_1 \quad [1]$$

wobei:

$dC_{obj}$ die erste Zeitableitung des Ziel-Gesamtdrehmoments ($C_{obj}$) ist; und
$TV_1$ ein erster Schwellenwert ist;
Bestimmen des Profils des Gesamtdrehmoments ($C_{obj}$), das für den Betrieb des aufgeladenen Verbrennungsmotors (1) während des Freigabeschritts des aufgeladenen Verbrennungsmotors (1) zu liefern ist; und
Aufteilen des Freigabeschritts des aufgeladenen Verbrennungsmotors (1) in einen ersten Teilschritt und einen zweiten Teilschritt; wobei der aufgeladene Verbrennungsmotor (1) während des ersten Teilschritts zum Erreichen des Profils des Gesamtdrehmoments ($C_{obj}$) gesteuert wird, indem die von dem aufgeladenen Verbrennungsmotor (1) für die Zylinder (3) implementierte Zündvorverstellung abgebaut wird und indem die von den Zylindern (3) angesaugte Luftmasse erhöht wird;
und wobei der erste Teilschritt enthalten ist zwischen dem Beginn des Freigabeschritts und dem Zeitpunkt, zu dem sich der aufgeladene Verbrennungsmotor (1) in einem Abschaltzustand befindet, d.h. bei fehlender Verbrennung,
oder aber zwischen dem Beginn des Freigabeschritts und dem Zeitpunkt, zu dem die folgende Bedingung erfüllt ist:

$$N/(N - N_S) * QAC_{obj} <= QAC_{MAXstim} + \Delta$$

wobei:

N die Anzahl der Zylinder (3) ist;

$N_s$ die Anzahl der bei der Verbrennung inaktiven Zylinder (3) ist;

$QAC_{obj}$ die Ziel-Luftmasse für jeden Zylinder (3) für die Lieferung des Gesamtdrehmoments ($C_{obj}$) an die Antriebsräder ist, wenn alle Zylinder (3) an der Verbrennung der entsprechenden Ziel-Luftmasse beteiligt sind;

$\Delta$ der Toleranzwert ist; und

$QAC_{MAXstim}$ die maximale Luftmasse ist, die für jeden Zylinder (3) eingeschlossen werden kann;

und wobei der aufgeladene Verbrennungsmotor (1) während des zweiten Teilschritts gesteuert wird mit einer Anzahl ($N_a$) von Zylindern (3), die für die Einspritzung und Verbrennung aktiv sind und mit denen das Profil des Gesamtdrehmoments ($C_{obj}$) erzeugt wird, und mit einer Anzahl ($N_s$) von Zylindern (3), die für die Einspritzung und Verbrennung inaktiv sind und die die maximal mögliche Luftmenge ansaugen; wobei der zweite Teilschritt zwischen dem Ende des ersten Teilschrittes und dem Ende des Freigabeschrittes des aufgeladenen Verbrennungsmotors (1) enthalten ist; und wobei sowohl die Anzahl ($N_a$) der für Einspritzung und Verbrennung aktiven Zylinder (3) als auch die Anzahl ($N_s$) der für Einspritzung und Verbrennung inaktiven Zylinder (3) während des zweiten Teilschrittes variabel ist; und

Einstellen des Überströmventils (16) und Geschlossenhalten des Abblaseventils (19) während des gesamten Freigabeschritts des aufgeladenen Verbrennungsmotors (1) und für ein Zeitintervall ($\Delta t$) von voreingestellter und vorzugsweise konstanter Dauer, beginnend mit dem Zeitpunkt, zu dem der Freigabeschritt des aufgeladenen Verbrennungsmotors (1) endet.

2. Steuer/Regelverfahren nach einem der vorangehenden Ansprüche, wobei jeder der Zylinder (3) mit dem Einlasskrümmer (4) über wenigstens ein entsprechendes Einlassventil und mit dem Auslasskrümmer (5) über wenigstens ein entsprechendes Auslassventil verbunden ist; und wobei die Einlassventile für alle Zylinder (3) in einer unabhängige Weise betätigt werden.

3. Steuer/Regelverfahren nach einem der vorangehenden Ansprüche, wobei der Verbrennungsmotor (1) eine Drosselklappe (8) umfasst, die dazu ausgelegt ist, die durch die Anzahl (N) an Zylindern (3) angesaugte Luftmasse zu regeln, und die wenigstens teilweise geöffnet ist, wenn sich der aufgeladene Verbrennungsmotor (1) im Abschaltzustand befindet.

4. Steuer/Regelverfahren nach Anspruch 3, wobei die Drosselklappe (8) vollständig geöffnet ist, wenn sich der aufgeladene Verbrennungsmotor (1) im Abschaltzustand befindet.

5. Steuer/Regelverfahren nach einem der vorangehenden Ansprüche, den weiteren Schritt des Einstellens des Überströmventils (16) umfassend, derart, dass es während des gesamten Freigabeschritts des aufgeladenen Verbrennungsmotors (1) teilweise geöffnet ist.

6. Steuer/Regelverfahren nach einem der vorangehenden Ansprüche, die weiteren Schritte umfassend:

Bestimmen eines minimalen Ladedrucks ($Pt_{min}$), um das Ziel-Gesamtdrehmoment ($C_{obj}$) zu gewährleisten; und Erreichen eines effektiven Ladedrucks ($P_{obj}$) höher als der minimale Ladedruck ($Pt_{min}$) bis zum Ende des Freigabeschritts des aufgeladenen Verbrennungsmotors (1).

7. Steuer/Regelverfahren nach Anspruch 6, die weiteren Schritte umfassend:

Bestimmen eines maximalen Ladedrucks ($Pt_{max}$), um das Ziel-Gesamtdrehmoment ($C_{obj}$) zu gewährleisten; und Erreichen eines effektiven Ladedrucks ($P_{obj}$) gleich dem maximalen Ladedruck ($Pt_{max}$) bis zum Ende des Freigabeschritts des aufgeladenen Verbrennungsmotors (1).

8. Steuer/Regelverfahren nach einem der Ansprüche 1 bis 5, den weiteren Schritt des Geschlossenhaltens des Überströmventils (16) während des gesamten Freigabeschritts des aufgeladenen Verbrennungsmotors (1) umfassend.

9. Steuer/Regelverfahren nach einem der vorangehenden Ansprüche, wobei die Anzahl ($N_a$) der für die Einspritzung und Verbrennung aktiven Zylinder (3) gerade ist und die Zylinder vorzugsweise gleichphasig sind.

10. Steuer/Regelverfahren nach einem der vorangehenden Ansprüche, wobei der aufgeladene Verbrennungsmotor (1) eine servo-unterstützte mechanische Gangschaltung oder eine robotisierte manuelle Gangschaltung oder ein AMT (automatisiertes Schaltgetriebe) oder eine manuelle Gangschaltung aufweist; und wobei das Verfahren vorsieht, den Zeitpunkt des Beginns eines Freigabeschrittes des aufgeladenen Verbrennungsmotors (1) in Abhängigkeit von dem Zeitpunkt zu bestimmen, zu dem der Fahrer auf einen Gangschalthebel oder auf Druckknöpfe am Lenkrad zur Auswahl des Übersetzungsverhältnisses zugreift, oder aber in Abhängigkeit von dem Befehl zur Auswahl des Übersetzungsverhältnisses.

**11.** Steuer/Regelverfahren nach einem der vorangehenden Ansprüche, bei dem der Freigabeschritt des aufgeladenen Verbrennungsmotors (1) beendet wird, wenn die folgende Bedingung erfüllt ist:

$$C_{obj} > TV_2 \quad [2]$$

wobei:

$C_{obj}$ das Ziel-Drehmoment ist; und
$TV_2$ ein zweiter Schwellenwert ist.

**12.** Steuer/Regelverfahren nach einem der Ansprüche 1 bis 10, wobei der Freigabeschritt des aufgeladenen Verbrennungsmotors (1) beendet wird, wenn die folgende Bedingung erfüllt ist:

$$(C_{obj} > TV_2) \text{ ODER } ((PP > TV_4) \text{ UND } (dPP > TV_5)) \quad [4]$$

wobei:

$C_{obj}$ das Ziel-Drehmoment ist;
PP die Stellung des Gaspedals ist:

dPP die erste Ableitung der Stellung des Gaspedals ist;
$TV_2$ ein zweiter Schwellenwert ist:

$TV_4$ ein vierter Schwellenwert ist; und
$TV_5$ ein fünfter Schwellenwert ist.

**13.** Steuer/Regelverfahren nach einem der vorangehenden Ansprüche, wobei der erste Wert ($TV_1$), der in einem vorläufigen Einstell- und Einrichtungsschritt bestimmt wird, vorzugsweise konstant und kleiner als Null ist; und wobei der zweite Wert ($TV_2$), der vierte Wert ($TV_4$) und der fünfte Wert ($TV_5$), die in einem vorläufigen Einstell- und Einrichtungsschritt bestimmt werden, vorzugsweise konstant und größer als Null sind.

**14.** Steuer/Regelverfahren nach einem der vorangehenden Ansprüche, wobei Kraftstoff in die Anzahl ($N_s$) von Zylindern (3) eingespritzt wird, die für Einspritzung und Verbrennung inaktiv sind.

## Revendications

**1.** Procédé pour commander, durant une étape de libération, un moteur à combustion interne (1) suralimenté à l'aide d'un turbocompresseur (12) pourvu d'une turbine (13) et d'un compresseur (14) ; le moteur à combustion interne (1) comprenant en outre un nombre (N) de cylindres (3), qui sont reliés à une tubulure d'admission (4) à partir de laquelle ils reçoivent de l'air frais et à une tubulure d'échappement (5) dans laquelle sont introduits les gaz d'échappement produits par la combustion ; le moteur à combustion interne suralimenté (1) comprenant en outre une soupape de décharge (16), qui est conçue pour réguler le débit des gaz d'échappement, et une soupape de surpression (19), qui est conçue pour réguler le débit de l'air qui s'écoule par un conduit de dérivation (18), qui est relié en parallèle au compresseur (14) ; le moteur à combustion interne suralimenté (1) étant en plus pré-agencé pour permettre le passage d'air qui ne participe pas à la combustion dans les cylindres (3) depuis la tubulure d'admission (4) directement dans le conduit d'échappement (10) ;
le procédé de commande comprenant les étapes de :
reconnaissance du moment de début d'une étape de libération du moteur à combustion interne suralimenté (1) ;
dans lequel l'étape de libération du moteur à combustion interne suralimenté (1) commence lorsque la condition suivante est satisfaite :

$$dC_{obj} < TV_1 \quad [1]$$

où :

dC$_{obj}$ est la première dérivée temporelle du couple objectif total (C$_{obj}$) ; et

TV$_1$ est une première valeur seuil ;

détermination du profil de couple total (C$_{obj}$) à apporter pour le fonctionnement du moteur à combustion interne suralimenté (1) durant l'étape de libération du moteur à combustion interne suralimenté (1) ; et

division de l'étape de libération du moteur à combustion interne suralimenté (1) en une première sous-étape et en une seconde sous-étape ; dans lequel la commande du moteur à combustion interne suralimenté (1) durant la première sous-étape pour obtenir le profil de couple total (C$_{obj}$) en dégradant l'avance d'allumage mise en œuvre par le moteur à combustion interne suralimenté (1) pour les cylindres (3) et en augmentant la masse d'air aspiré par les cylindres (3) ;

et dans lequel la première sous-étape est comprise entre le début de l'étape de libération et le moment où le moteur à combustion interne suralimenté (1) est dans un état coupé, c'est-à-dire, en l'absence de combustion, ou alors entre le début de l'étape de libération et le moment où la condition suivante est satisfaite :

$$N/(N - N_s) * QAC_{obj} <= QAC_{MAXstim} + \Delta$$

où :

N est le nombre de cylindres (3) ;

N$_s$ est le nombre de cylindres (3) inactifs pour la combustion ;

QAC$_{obj}$ est la masse d'air objective pour chaque cylindre (3) pour apporter le couple total (C$_{obj}$) aux roues motrices, dans le cas où les cylindres (3) sont tous impliqués dans la combustion de la masse d'air objective respective ;

$\Delta$ est la valeur de tolérance ; et

QAC$_{MAXstim}$ est la masse d'air maximale qui peut être enfermée pour chaque cylindre (3) ;

et dans lequel la commande du moteur à combustion interne suralimenté (1) durant la seconde sous-étape par le biais d'un nombre (N$_a$) de cylindres (3) actifs pour l'injection et la combustion avec lesquels générer le profil de couple total (C$_{obj}$) et d'un nombre (N$_s$) de cylindres (3) inactifs pour l'injection et la combustion qui aspirent la quantité d'air maximale possible ; dans laquelle la seconde sous-étape est comprise entre la fin de la première sous-étape et la fin de l'étape de libération du moteur à combustion interne suralimenté (1) ; et dans lequel le nombre (N$_a$) de cylindres (3) actifs pour l'injection et la combustion et le nombre (N$_s$) de cylindres (3) inactifs pour l'injection et la combustion sont tous les deux variables durant la seconde sous-étape ; et

l'ajustement de la soupape de décharge (16) et le maintien de la soupape de surpression (19) fermée tout au long de l'étape de libération du moteur à combustion interne suralimenté (1) et pendant un intervalle de temps ($\Delta$t) de durée prédéfinie, et de préférence constante, commençant au moment où l'étape de libération du moteur à combustion interne suralimenté (1) se termine.

2. Procédé de commande selon l'une quelconque des revendications précédentes, dans lequel chacun des cylindres (3) est relié à la tubulure d'admission (4) via au moins une soupape d'admission respective et à la tubulure d'échappement (5) via au moins une soupape d'échappement respective ; et dans lequel les soupapes d'admission sont actionnées d'une manière indépendante pour chacun des cylindres (3).

3. Procédé de commande selon l'une quelconque des revendications précédentes, dans lequel le moteur à combustion interne (1) comprend un boîtier papillon conçu pour réguler la masse d'air aspiré par le nombre (N) de cylindres (3) et est au moins partiellement ouvert lorsque le moteur à combustion interne suralimenté (1) est dans l'état coupé.

4. Procédé de commande selon la revendication 3, dans lequel le boîtier papillon (8) est complètement ouvert lorsque le moteur à combustion interne suralimenté (1) est dans l'état coupé.

5. Procédé de commande selon l'une quelconque des revendications précédentes et comprenant l'étape supplémentaire d'ajustement de la soupape de décharge (16) d'une manière telle qu'elle sera partiellement ouverte tout au long de l'étape de libération du moteur à combustion interne suralimenté (1).

**6.** Procédé de commande selon l'une quelconque des revendications précédentes et comprenant les étapes supplémentaires de :

détermination d'une pression de suralimentation minimale ($Pt_{min}$) de manière à garantir le couple objectif total ($C_{obj}$) ; et
obtention d'une pression de suralimentation réelle ($P_{obj}$) plus élevée que la pression de suralimentation minimale ($Pt_{min}$) jusqu'à la fin de l'étape de libération du moteur à combustion interne suralimenté (1).

**7.** Procédé de commande selon la revendication 6 et comprenant les étapes supplémentaires de :

détermination d'une pression de suralimentation maximale ($Pt_{max}$) de manière à garantir le couple objectif total ($C_{obj}$) ; et
obtention d'une pression de suralimentation réelle ($P_{obj}$) égale à la pression de suralimentation maximale ($Pt_{max}$) jusqu'à la fin de l'étape de libération du moteur à combustion interne suralimenté (1).

**8.** Procédé de commande selon l'une quelconque des revendications 1 à 5 et comprenant l'étape supplémentaire de maintien de la soupape de décharge (16) fermée tout au long de l'étape de libération du moteur à combustion interne suralimenté (1).

**9.** Procédé de commande selon l'une quelconque des revendications précédentes, dans lequel le nombre ($N_a$) de cylindres (3) actifs pour l'injection et la combustion est pair et, de préférence, les cylindres sont en phase.

**10.** Procédé de commande selon l'une quelconque des revendications précédentes, dans lequel le moteur à combustion interne suralimenté (1) comprend un changement de vitesse mécanique servo-assisté ou bien un changement de vitesse manuel robotisé ou AMT (transmission manuelle automatisée) ou bien un changement de vitesse manuel ; et dans lequel le procédé envisage la détermination du moment de début d'une étape de libération du moteur à combustion interne suralimenté (1) en fonction du moment où le conducteur intervient sur un levier de changement de vitesse ou bien sur des boutons-poussoirs placés sur le volant pour sélectionner le rapport de transmission ou bien encore en fonction de l'instruction de sélection du rapport de transmission.

**11.** Procédé de commande selon l'une quelconque des revendications précédentes, dans lequel l'étape de libération du moteur à combustion interne suralimenté (1) se termine lorsque la condition suivante est satisfaite :

$$C_{obj} > TV_2 \quad [2]$$

où :

$C_{obj}$ est le couple objectif ; et
$TV_2$ est une deuxième valeur seuil.

**12.** Procédé de commande selon l'une quelconque des revendications 1 à 10, dans lequel l'étape de libération du moteur à combustion interne suralimenté (1) se termine lorsque la condition suivante est satisfaite :

$$(Cobj > TV_2) \ OU \ ((PP > TV_4) \ ET \ (dPP > TV_5)) \quad [4]$$

où :

$C_{obj}$ est le couple objectif ;
PP est la position de la pédale d'accélérateur ;
dPP est la première dérivée temporelle de la position de la pédale d'accélérateur ;
$TV_2$ est une deuxième valeur seuil ;
$TV_4$ est une quatrième valeur seuil ; et
$TV_5$ est une cinquième valeur seuil.

**13.** Procédé de commande selon l'une quelconque des revendications précédentes, dans lequel la première valeur ($TV_1$), qui est déterminée lors d'une étape d'ajustement et d'établissement préliminaire, est de préférence constante et inférieure à zéro ; et dans lequel la deuxième valeur ($TV_2$), la quatrième valeur ($TV_4$) et la cinquième valeur ($TV_5$), qui sont déterminées lors d'une étape d'ajustement et d'établissement préliminaire, sont de préférence constantes et supérieures à zéro.

14. Procédé de commande selon l'une quelconque des revendications précédentes, dans lequel du carburant est injecté dans le nombre ($N_s$) de cylindres (3) inactifs pour l'injection et la combustion.

FIG.1

FIG.2

FIG.3